# EUROPEAN PATENT APPLICATION

(11) **EP 4 383 881 A1**
(43) Date of publication of application: **12.06.2024**
(21) Application number: 21952376.8
(22) Date of filing: 06.08.2021
(51) Int. Cl.: H04W 72/04, H04W 52/02

(54) **RADIO RESOURCE MANAGEMENT MEASUREMENT METHOD AND APPARATUS**

(71) Applicant: Beijing Xiaomi Mobile Software Co., Ltd., Beijing 100085 (CN)
(72) Inventor: SHI, Rao, Beijing 100085 (CN); LI, Yanhua, Beijing 100085 (CN)
(74) Representative: Hersina, Günter
(86) International application number: PCT/CN2021/111089
(87) International publication number: WO 2023/010499

(57) **Abstract**

A radio resource management (RRM) measurement method and apparatus, which are applied to the technical field of communications. The measurement method is executed by a terminal device (12), and comprises: on the basis of a mapping relationship between the number of antennas and an RRM measurement parameter, determining a first RRM measurement parameter corresponding to the number of receiving antennas in the terminal device (12) (21); and performing RRM measurement on the basis of the first RRM measurement parameter (22). The terminal device (12) performs RRM measurement on the basis of a first RRM measurement parameter corresponding to the number of antennas of the terminal device (12), such that not only are the accuracy and reliability of antenna resource management of the terminal device (12) ensured, but also the power consumption of the terminal device (12) is reduced, thereby improving the endurance capability of the terminal device (12).

## Description

### TECHNICAL FIELD

The present disclosure relates to a field of communication technology, and particularly to a radio resource management (RRM) measurement method and apparatus.

### BACKGROUND

In a communication system, the movement of a terminal device causes a channel status around it to change constantly. In order to support the mobility of the terminal device and to obtain the channel status of a current cell of the terminal device in a timely manner, a network device may configure a radio resource management (RRM) measurement for the terminal device. The RRM measurement is used to measure a signal quality of the current serving cell and neighboring cells. However, too much measurement will increase a power consumption of the terminal device and affect a battery life.

Therefore, how to reduce the power consumption of the terminal device as much as possible while supporting the mobility of the terminal device is an urgent problem to be solved at present.

### SUMMARY

Embodiments of the disclosure provide a radio resource management (RRM) measurement method and apparatus, which may be applied in a field of communication technology.

In a first aspect, embodiments of the disclosure provide an RRM measurement method, and the method is performed by a terminal device. The method includes: determining a first RRM measurement parameter corresponding to a number of receiving antennas in a terminal device based on a mapping relationship between a number of antennas and an RRM measurement parameter; and performing an RRM measurement based on the first RRM measurement parameter.

Optionally, the method further includes: determining the mapping relationship between the number of antennas and the RRM measurement parameter based on a protocol; or determining the mapping relationship between the number of antennas and the RRM measurement parameter based on a received indication message.

Optionally, determining the first RRM measurement parameter corresponding to the number of receiving antennas in the terminal device includes: determining that an RRM low mobility criterion measurement parameter is a first threshold in response to the number of receiving antennas in the terminal device being a first number; or determining that the RRM low mobility criterion measurement parameter is a second threshold in response to the number of receiving antennas in the terminal device being a second number; in which the first number is different from the second number, and the first threshold is different from or same as the second threshold.

Optionally, the first threshold and the second threshold are measurement duration thresholds; or the first threshold and the second threshold are signal strength difference thresholds; or the first threshold and the second threshold are a measurement duration threshold and a signal strength difference threshold.

Optionally, determining the first RRM measurement parameter corresponding to the number of receiving antennas in the terminal device includes: determining that an RRM stationary criterion measurement parameter is a third threshold in response to the number of receiving antennas in the terminal device being a first number; or determining that the RRM stationary criterion measurement parameter is a fourth threshold in response to the number of receiving antennas in the terminal device being a second number; in which the first number is different from the second number, and the third threshold is different from or same as the fourth threshold.

Optionally, the third threshold and the fourth threshold are measurement duration thresholds; or the third threshold and the fourth threshold are signal strength difference thresholds; or the third threshold and the fourth threshold are a measurement duration threshold and a signal strength difference threshold.

Optionally, determining the first RRM measurement parameter corresponding to the number of receiving antennas in the terminal device includes: determining that an RRM non-cell edge criterion measurement parameter is a fifth threshold in response to the number of receiving antennas in the terminal device being a first number; or determining that the RRM non-cell edge criterion measurement parameter is a sixth threshold in response to the number of receiving antennas in the terminal device being a second number; in which the first number is different from the second number, and the fifth threshold is different from or same as the sixth threshold.

Optionally, the fifth threshold and the sixth threshold are signal strength thresholds; or the fifth threshold and the sixth threshold are signal quality thresholds; or the fifth threshold and the sixth threshold are a signal strength threshold and a signal quality threshold.

Optionally, performing the RRM measurement based on the first RRM measurement parameter includes: in a case that the terminal device is in a radio resource control (RRC) idle state, performing the RRM measurement based on the first RRM measurement parameter; or in a case that the terminal device is in an RRC inactive state, performing the RRM measurement based on the first RRM measurement parameter.

In a second aspect, embodiments of the disclosure provide another RRM measurement method, and the method is performed by a network device. The method includes: sending indication information, in which the indication information is configured to indicate a mapping relationship between a number of antennas and an RRM measurement parameter.

Optionally, the indication information includes at least one of: a mapping relationship between the number of antennas and an RRM low mobility criterion measurement parameter; a mapping relationship between the number of antennas and an RRM stationary criterion measurement parameter; or a mapping relationship between the number of antennas and an RRM non-cell edge criterion measurement parameter.

Optionally, the mapping relationship between the number of antennas and the RRM low mobility criterion measurement parameter includes a first threshold corresponding to a first number of antennas, and a second threshold corresponding to a second number of antennas; in which the first number is different from the second number, and the first threshold is different from or same as the second threshold.

Optionally, the first threshold and the second threshold are measurement duration thresholds; or the first threshold and the second threshold are signal strength difference thresholds; or the first threshold and the second threshold are a measurement duration threshold and a signal strength difference threshold.

Optionally, the mapping relationship between the number of antennas and the RRM stationary criterion measurement parameter includes a third threshold corresponding to a first number of antennas, and a fourth threshold corresponding to a second number of antennas; in which the first number is different from the second number, and the third threshold is different from or same as the fourth threshold.

Optionally, the third threshold and the fourth threshold are measurement duration thresholds; or the third threshold and the fourth threshold are signal strength difference thresholds; or the third threshold and the fourth threshold are a measurement duration threshold and a signal strength difference threshold.

Optionally, the mapping relationship between the number of antennas and the RRM non-cell edge criterion measurement parameter includes a fifth threshold corresponding to a first number of antennas, and a sixth threshold corresponding to a second number of antennas; in which the first number is different from the second number, and the fifth threshold is different from or same as the sixth threshold.

Optionally, the fifth threshold and the sixth threshold are signal strength thresholds; or the fifth threshold and the sixth threshold are signal quality thresholds; or the fifth threshold and the sixth threshold are a signal strength threshold and a signal quality threshold.

In a third aspect, embodiments of the disclosure provide a communication apparatus. The communication apparatus has part or all of the functions of the terminal device which implements the method described in the first aspect. For example, the apparatus may have the functions of some or all of the embodiments of the disclosure, or may have the function of independently implementing any embodiment of the disclosure. The functions can be implemented by hardware, or can be implemented by executing corresponding software using the hardware. The hardware or software includes one or more units or modules corresponding to the above functions.

In a fourth aspect, embodiments of the disclosure provide another communication apparatus. The communication apparatus has part or all of the functions of the network device which implements the method described in the second aspect. For example, the apparatus may have the functions of some or all of the embodiments of the disclosure, or may have the function of independently implementing any embodiment of the disclosure. The functions can be implemented by hardware, or can be implemented by executing corresponding software using the hardware. The hardware or software includes one or more units or modules corresponding to the above functions.

In a fifth aspect, embodiments of the disclosure provide a communication apparatus. The communication apparatus includes: a processor. When the processor calls computer programs stored in a memory, the method described in the first aspect above is implemented.

In a sixth aspect, embodiments of the disclosure provide a communication apparatus. The communication apparatus includes: a processor. When the processor calls computer programs stored in a memory, the method described in the second aspect above is implemented.

In a seventh aspect, embodiments of the disclosure provide a communication apparatus. The communication apparatus includes: a processor and a memory having computer programs stored thereon. When the computer programs stored in the memory are executed by the processor, the communication apparatus is caused to implement the method described in the first aspect above.

In an eighth aspect, embodiments of the disclosure provide a communication apparatus. The communication apparatus includes: a processor and a memory having computer programs stored thereon. When the computer programs stored in the memory are executed by the processor, the communication apparatus is caused to implement the method described in the second aspect above.

In a ninth aspect, embodiments of the disclosure provide a communication apparatus. The communication apparatus includes: a processor and an interface circuit. The interface circuit is configured to receive code instructions and transmit them to the processor. The processor is configured to execute the code instructions to cause the apparatus to implement the method described in the first aspect above.

In a tenth aspect, embodiments of the disclosure provide a communication apparatus. The communication apparatus includes: a processor and an interface circuit. The interface circuit is configured to receive code instructions and transmit them to the processor. The processor is configured to execute the code instructions to cause the apparatus to implement the method described in the second aspect above.

In an eleventh aspect, embodiments of the disclosure provide a communication system. The system includes the communication apparatus of the third aspect and the communication apparatus of the fourth aspect; or the system includes the communication apparatus of the fifth aspect and the communication apparatus of the sixth aspect; or the system includes the communication apparatus of the seventh aspect and the communication apparatus of the eighth aspect; or the system includes the communication apparatus of the ninth aspect and the communication apparatus of the tenth aspect.

In a twelfth aspect, embodiments of the disclosure provide a computer-readable storage medium having instructions stored thereon. The instructions are used by the above terminal device. When the instructions are executed, the method of the first aspect is implemented.

In a thirteenth aspect, embodiments of the disclosure provide a computer-readable storage medium having instructions stored thereon. The instructions are used by the above terminal device. When the instructions are executed, the method of the second aspect is implemented.

In a fourteenth aspect, embodiments of the disclosure provide a computer program product including computer programs. When the computer programs are executed by a computer, the computer is caused to implement the method of the first aspect.

In a fifteenth aspect, embodiments of the disclosure provide a computer program product including computer programs. When the computer programs are executed by a computer, the computer is caused to implement the method of the second aspect.

In a sixteenth aspect, embodiments of the disclosure provide a chip system. The chip system includes at least one processor and an interface, for supporting the terminal device in realizing the functions involved in the first aspect, e.g., at least one of determining or processing data and information involved in the method described above. In a possible design, the chip system further includes a memory, which is configured to store computer programs and data necessary for the terminal device. The chip system may consist of chips or may include chips and other discrete devices.

In a seventeenth aspect, embodiments of the disclosure provide a chip system. The chip system includes at least one processor and an interface, for supporting the terminal device in realizing the functions involved in the second aspect, e.g., at least one of determining or processing data and information involved in the method described above. In a possible design, the chip system further includes a memory, which is configured to store computer programs and data necessary for the terminal device. The chip system may consist of chips or may include chips and other discrete devices.

In an eighteenth aspect, embodiments of the disclosure provide a computer program. When the computer program runs on a computer, the computer is caused to implement the method of the first aspect.

In a nineteenth aspect, embodiments of the disclosure provide a computer program. When the computer program runs on a computer, the computer is caused to implement the method of the second aspect.

### BRIEF DESCRIPTION OF THE DRAWINGS

In order to clearly illustrate technical solutions of embodiments of the disclosure or background technologies, the accompanying drawings used in the embodiments or the background technologies will be explained below.
FIG. 1 is a schematic diagram of a communication system according to an embodiment of the disclosure.
FIG. 2 is a flowchart of a radio resource management (RRM) measurement method provided by an embodiment of the present disclosure.
FIG. 3 is a flowchart of an RRM measurement method provided by another embodiment of the present disclosure.
FIG. 4 is a flowchart of an RRM measurement method provided by another embodiment of the present disclosure.
FIG. 5 is a flowchart of an RRM measurement method provided by another embodiment of the present disclosure.
FIG. 6 is a block diagram of a communication apparatus provided by an embodiment of the disclosure.
FIG. 7 is a block diagram of a communication apparatus provided by another embodiment of the disclosure.
FIG. 8 is a block diagram of a chip provided by an embodiment of the disclosure.

### DETAILED DESCRIPTION

In order to better understand a radio resource management (RRM) measurement method provided in the embodiments of the disclosure, a communication system used in the embodiments of the disclosure is first described below.

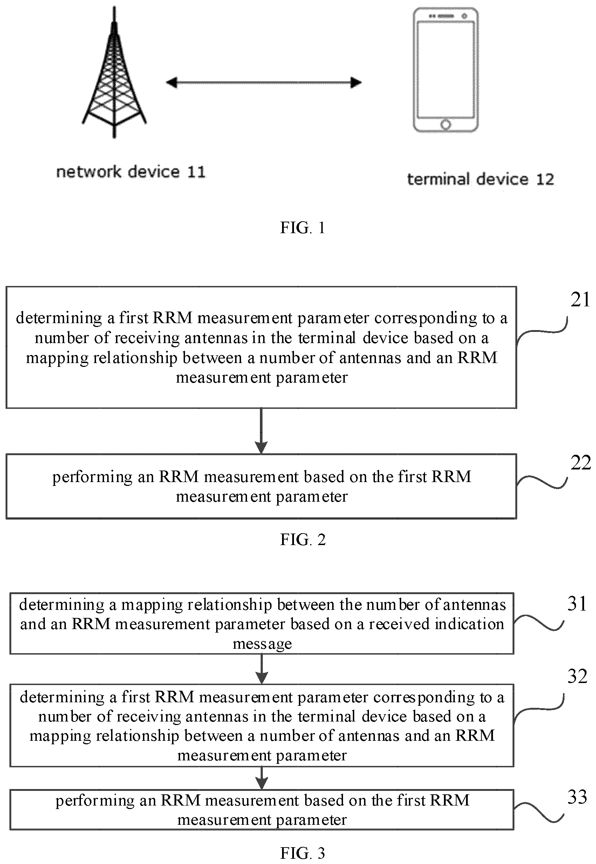

As illustrated in FIG. 1, FIG. 1 is a block diagram of a communication system provided by an embodiment of the disclosure. The communication system may include, but is not limited to, one network device, and one terminal device. The number and form of devices shown in FIG. 1 are only for examples and do not constitute a limitation on the embodiments of the disclosure, and the communication system may include two or more network devices, and two or more terminal devices in practical applications. The communication system shown in FIG. 1 includes, for example, a network device 11 and a terminal device 12.

It should be noted that the technical solutions of the embodiments of the disclosure can be used in various communication systems, such as, a long term evolution (LTE) system, a 5th generation (5G) mobile communication system, a 5G new radio (NR) system, or other future new mobile communication systems.

The network device 11 in the embodiments of the disclosure is an entity on a network side for transmitting or receiving signals. For example, the network device 11 may be an evolved NodeB (eNB), a transmission reception point (TRP), a next generation NodeB (gNB) in the NR system, a base station in other future mobile communication systems, or an access node in a wireless fidelity (WiFi) system. The specific technology and specific device form adopted by the network device are not limited in the embodiments of the disclosure. The network device provided by the embodiments of the disclosure may be composed of a central unit (CU) and a distributed unit (DU). The CU may also be called a control unit. The CU-DU structure allows a protocol layer of the network device, such as a base station, to be split, some functions of the protocol layer are placed in the CU for centralized control, and some or all of the remaining functions of the protocol layer are distributed in the DU, which is intensively controlled by the CU.

The terminal device 12 in the embodiments of the disclosure is an entity on a user side for receiving or transmitting signals, such as a cellular phone. The terminal device may also be referred to as a terminal, a user equipment (UE), a mobile station (MS), a mobile terminal (MT), and the like. The terminal device can be a car with a communication function, a smart car, a mobile phone, a wearable device, a Pad, a computer with a wireless transceiver function, a virtual reality (VR) terminal device, an augmented reality (AR) terminal device, a wireless terminal device in the industrial control, a wireless terminal device in the self-driving, a wireless terminal device in the remote medical surgery, a wireless terminal device in the smart grid, a wireless terminal device in the transportation safety, a wireless terminal device in the smart city, a wireless terminal device in the smart home, etc. The specific technology and specific device form adopted by the terminal device are not limited in the embodiments of the disclosure.

It is understood that the communication system described in the embodiments of the disclosure is intended to more clearly illustrate the technical solutions of the embodiments of the disclosure, and does not constitute a limitation on the technical solutions provided by the embodiments of the disclosure. It is understood by those skilled in the art that as the system architecture evolves and new business scenarios emerge, the technical solutions provided by the embodiments of the disclosure are also applicable to similar technical problems.

An RRM method and apparatus will be introduced in detail below with reference to the accompanying drawings.

As illustrated in FIG. 2, FIG. 2 is a flowchart of an RRM measurement method provided by an embodiment of the disclosure. The method is performed by a terminal device. As illustrated in FIG. 2, the method includes, but is not limited to the following steps.

At step 21, a first RRM measurement parameter corresponding to a number of receiving antennas in the terminal device is determined based on a mapping relationship between a number of antennas and an RRM measurement parameter.

Alternatively, the mapping relationship between the number of antennas and the RRM measurement parameter includes at least one of:
a mapping relationship between the number of antennas and an RRM low mobility criterion measurement parameter;
a mapping relationship between the number of antennas and an RRM stationary criterion measurement parameter; or
a mapping relationship between the number of antennas and an RRM non-cell edge criterion measurement parameter.

It can be understood that respective terminal devices may have RRM low mobility criterion measurement parameters, RRM stationary criterion measurement parameters and RRM non-cell edge criterion measurement parameters corresponding to the respective terminal devices. The RRM low mobility criterion measurement parameters, the RRM stationary criterion measurement parameters and the RRM non-cell edge criterion measurement parameters may be the same or different. In addition, the corresponding RRM measurement parameters for the terminal devices with different numbers of antennas may be the same or different, which is not limited in the disclosure.

At step 22, an RRM measurement is performed based on the first RRM measurement parameter.

It should be noted that if the numbers of receiving antennas in the terminal devices are different, and the corresponding measurement signal strengths may be different. For example, when comparing a terminal device having one antenna with a terminal device having two antennas which are located at a same location in a cell and have a same moving speed, a signal strength measurement value of the terminal device having two antennas is often greater than that of the terminal device having one antenna. In addition, terminal devices with different numbers of antennas have different capabilities related to the environmental interference, that is, the terminal device with two antennas is less interfered by environment and has a relatively stable signal fluctuation. In this case, if terminal devices with different numbers of antennas adopt a set of measurement parameters to perform an RRM measurement, it may lead to inaccurate radio resource management and affect the battery life of the terminal devices. Therefore, in the disclosure, different RRM measurement parameters are determined for terminal devices with different numbers of antennas, and the RRM measurement is performed based on the determined RRM measurement parameters, thereby reducing a power consumption of the terminal device on the basis of reliably supporting a mobility of the terminal device.

Alternatively, after the terminal device determines the first RRM measurement parameter, the terminal device may determine a state of the terminal device (for example, a low mobility state, a stationary state, a non-cell edge state) according to the first RRM measurement parameter. After the state of the terminal device is determined, an RRM measurement period and an RRM measurement range can be updated. For example, the RRM measurement period can be correspondingly extended, or the measurement on the neighboring cell is stopped, so that the power consumption of the terminal device is saved.

It should be noted that, for terminal devices with the same number of antennas but in different states, the updated RRM measurement periods may be the same or different. Alternatively, for terminal devices with the same number of antennas but in different states, the updated RRM measurement ranges may be the same or different. For terminal devices with different numbers of antennas and in the same state, the updated RRM measurement periods of may be the same or different. Alternatively, for terminal devices with different numbers of antennas and in the same state, the updated RRM measurement ranges may be the same or different. The disclosure does not limit thereto.

Alternatively, the terminal device may determine the corresponding RRM measurement periods and measurement ranges when the terminal device is in different states according to a protocol or an indication of the network device.

With the embodiment of the disclosure, the terminal device determines the first RRM measurement parameter corresponding to the number of receiving antennas in the terminal device based on the mapping relationship between the number of antennas and the RRM measurement parameter, and performs the RRM measurement based on the first RRM measurement parameter. In this way, the terminal device performs the RRM measurement based on the first RRM measurement parameter corresponding to the number of its antennas, thereby not only ensuring an accuracy and reliability of its antenna resource management, but also saving the power consumption of the terminal device and improving the battery life of the terminal device.

As illustrated in FIG. 3, FIG. 3 is a flowchart of an RRM measurement method provided by an embodiment of the disclosure. The method is performed by a terminal device. As illustrated in FIG. 3, the method includes, but is not limited to the following steps.

At step 31, a mapping relationship between the number of antennas and an RRM measurement parameter is determined based on a received indication message.

Alternatively, the indication information may include at least one of:
a mapping relationship between the number of antennas and an RRM low mobility criterion measurement parameter;
a mapping relationship between the number of antennas and an RRM stationary criterion measurement parameter; or
a mapping relationship between the number of antennas and an RRM non-cell edge criterion measurement parameter.

At step 32, a first RRM measurement parameter corresponding to a number of receiving antennas in the terminal device is determined based on the mapping relationship between the number of antennas and the RRM measurement parameter.

Alternatively, in response to the number of receiving antennas in the terminal device being a first number, the RRM low mobility criterion measurement parameter is determined as a first threshold.

Or, in response to the number of receiving antennas in the terminal device being a second number, the RRM low mobility criterion measurement parameter is determined as a second threshold.

The first number is different from the second number, and the first threshold is different from or same as the second threshold.

For example, the first number may be 1 and the second number may be 2.

Alternatively, the first threshold and the second threshold may be measurement duration thresholds.

Or, the first threshold and the second threshold may be signal strength difference thresholds.

Or, the first threshold and the second threshold may be a measurement duration threshold and a signal strength difference threshold.

The signal strength difference threshold is configured to indicate a threshold of a difference between a reference received signal strength and a signal strength of a serving cell at a current moment measured by the terminal device within a time period exceeding the measurement duration threshold.

Alternatively, in the mapping relationship between the number of antennas and the RRM low mobility criterion measurement parameter, the first number is 1, and the second number is 2. Since an anti-interference capability of the terminal device with one antenna is weak, in the case of the same measurement duration threshold, the signal strength difference threshold corresponding to the first number may be greater than the signal strength difference threshold corresponding to the second number.

Or, the first number is 1, the second number is 2, and the signal strength difference threshold corresponding to the first number may be smaller than the signal strength difference threshold corresponding to the second number.

Or, the first number is 1, the second number is 2, and the signal strength difference threshold corresponding to the first number may be equal to the signal strength difference threshold corresponding to the second number. The disclosure does not limit thereto.

Alternatively, in response to the number of receiving antennas in the terminal device being a first number, the RRM stationary criterion measurement parameter is determined as a third threshold.

Or, in response to the number of receiving antennas in the terminal device being a second number, the RRM stationary criterion measurement parameter is determined as a fourth threshold.

Alternatively, the third threshold and the fourth threshold may be measurement duration thresholds.

Or, the third threshold and the fourth threshold may be signal strength difference thresholds.

Or, the third threshold and the fourth threshold may be a measurement duration threshold and a signal strength difference threshold.

Alternatively, in response to the number of receiving antennas in the terminal device being a first number, the RRM non-cell edge criterion measurement parameter is determined as a fifth threshold.

Or, in response to the number of receiving antennas in the terminal device being a second number, the RRM non-cell edge criterion measurement parameter is determined as a sixth threshold.

The first number is different from the second number, and the fifth threshold is different from or same as the sixth threshold.

Alternatively, the fifth threshold and the sixth threshold may be signal strength thresholds.

Or, the fifth threshold and the sixth threshold may be signal quality thresholds.

Or, the fifth threshold and the sixth threshold may be a signal strength threshold and a signal quality threshold.

The signal quality threshold is a threshold of a signal quality of a signal received by the terminal device. The signal strength threshold is a threshold of a signal strength of a signal received by the terminal device. That is, if the signal quality of the signal received by the terminal device is greater than the signal quality threshold, and the signal strength of the signal received by the terminal device is greater than the signal strength threshold, the terminal device is in the non-cell edge state.

At step 33, an RRM measurement is performed based on the first RRM measurement parameter.

Regarding a specific implementation of step 33, reference can be made to detailed description of other embodiments of the disclosure, which is not elaborated here.

With the embodiment of the disclosure, the terminal device determines the mapping relationship between the number of antennas and the RRM measurement parameter based on the received indication message, then determines the first RRM measurement parameter corresponding to the number of receiving antennas in the terminal device based on the mapping relationship between the number of antennas and the RRM measurement parameter, and finally performs the RRM measurement based on the first RRM measurement parameter. In this way, the terminal device performs the RRM measurement based on the first RRM measurement parameter corresponding to the number of its antennas, thereby not only ensuring an accuracy and reliability of its antenna resource management, but also saving the power consumption of the terminal device and improving the battery life of the terminal device.

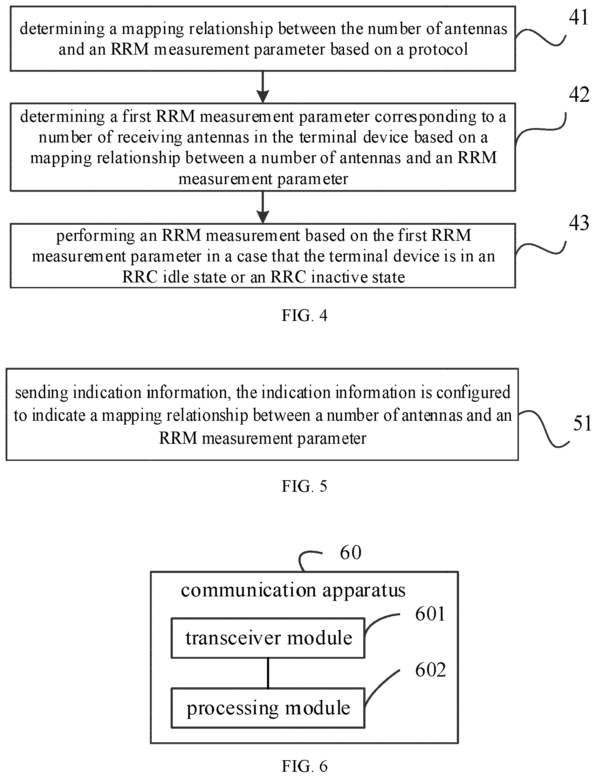

As illustrated in FIG. 4, FIG. 4 is a flowchart of an RRM measurement method provided by an embodiment of the disclosure. The method is performed by a terminal device. As illustrated in FIG. 4, the method includes, but is not limited to the following steps.

At step 41, a mapping relationship between the number of antennas and an RRM measurement parameter is determined based on a protocol.

At step 42, a first RRM measurement parameter corresponding to a number of receiving antennas in the terminal device is determined based on the mapping relationship between the number of antennas and the RRM measurement parameter.

Regarding a specific implementation of step 43, reference can be made to detailed description of other embodiments of the disclosure, which is not elaborated here.

At step 43, an RRM measurement is performed based on the first RRM measurement parameter in a case that the terminal device is in a radio resource control (RRC) idle state or an RRC inactive state.

It can be understood that, in the case that the terminal device is in the RRC idle state or the RRC inactive state, the RRM measurement can be performed based on the first RRM measurement parameter. The power consumption of the terminal device is further saved, and the battery life of the terminal device is improved.

With the embodiment of the disclosure, the terminal device determines the mapping relationship between the number of antennas and the RRM measurement parameter based on the protocol, then determines the first RRM measurement parameter corresponding to the number of receiving antennas in the terminal device based on the mapping relationship between the number of antennas and the RRM measurement parameter, and finally performs the RRM measurement based on the first RRM measurement parameter in the case that the terminal device is in the RRC idle state or the RRC inactive state. In this way, the terminal device performs the RRM measurement based on the first RRM measurement parameter corresponding to the number of its antennas, thereby not only ensuring an accuracy and reliability of its antenna resource management, but also saving the power consumption of the terminal device and improving the battery life of the terminal device.

As illustrated in FIG. 5, FIG. 5 is a flowchart of an RRM measurement method provided by an embodiment of the disclosure. The method is performed by a network device. As illustrated in FIG. 5, the method includes, but is not limited to the following steps.

At step 51, indication information is sent. The indication information is configured to indicate a mapping relationship between a number of antennas and an RRM measurement parameter.

Alternatively, the indication information may include at least one of:
a mapping relationship between the number of antennas and an RRM low mobility criterion measurement parameter;
a mapping relationship between the number of antennas and an RRM stationary criterion measurement parameter; or
a mapping relationship between the number of antennas and an RRM non-cell edge criterion measurement parameter.

It can be understood that respective terminal devices may have RRM low mobility criterion measurement parameters, RRM stationary criterion measurement parameters and RRM non-cell edge criterion measurement parameters corresponding to the respective terminal devices. The RRM low mobility criterion measurement parameters, the RRM stationary criterion measurement parameters and the RRM non-cell edge criterion measurement parameters may be the same or different. In addition, the corresponding RRM measurement parameters for the terminal devices with different numbers of antennas may be the same or different, which is not limited in the disclosure.

Alternatively, the mapping relationship between the number of antennas and the RRM low mobility criterion measurement parameter includes a first threshold corresponding to a first number of antennas, and a second threshold corresponding to a second number of antennas.

The first number is different from the second number, and the first threshold is different from or same as the second threshold.

Alternatively, the first threshold and the second threshold may be measurement duration thresholds.

Or, the first threshold and the second threshold may be signal strength difference thresholds.

Or, the first threshold and the second threshold may be a measurement duration threshold and a signal strength difference threshold.

The signal strength difference threshold is configured to indicate a threshold of a difference between a reference received signal strength and a signal strength of a serving cell at a current moment measured by the terminal device within a time period exceeding the measurement duration threshold.

Alternatively, the mapping relationship between the number of antennas and the RRM stationary criterion measurement parameter includes a third threshold corresponding to a first number of antennas, and a fourth threshold corresponding to a second number of antennas.

The first number is different from the second number, and the third threshold is different from or same as the fourth threshold.

Alternatively, the third threshold and the fourth threshold may be measurement duration thresholds.

Or, the third threshold and the fourth threshold may be signal strength difference thresholds.

Or, the third threshold and the fourth threshold may be a measurement duration threshold and a signal strength difference threshold.

Alternatively, the mapping relationship between the number of antennas and the RRM non-cell edge criterion measurement parameter includes a fifth threshold corresponding to a first number of antennas, and a sixth threshold corresponding to a second number of antennas.

The first number is different from the second number, and the fifth threshold is different from or same as the sixth threshold.

Alternatively, the fifth threshold and the sixth threshold may be signal strength thresholds.

Or, the fifth threshold and the sixth threshold may be signal quality thresholds.

Or, the fifth threshold and the sixth threshold may be a signal strength threshold and a signal quality threshold.

The signal quality threshold is a threshold of a signal quality of a signal received by the terminal device. The signal strength threshold is a threshold of a signal strength of a signal received by the terminal device. That is, if the signal quality of the signal received by the terminal device is greater than the signal quality threshold, and the signal strength of the signal received by the terminal device is greater than the signal strength threshold, the terminal device is in the non-cell edge state.

With the embodiment of the disclosure, the network device sends the indication information. The indication information is configured to indicate the mapping relationship between the number of antennas and the RRM measurement parameter. In this way, the network device sends the mapping relationship between the number of antennas and the RRM measurement parameter to the terminal device, so that the terminal device performs the RRM measurement based on the first RRM measurement parameter corresponding to the number of its antennas, thereby not only ensuring an accuracy and reliability of its antenna resource management, but also saving the power consumption of the terminal device and improving the battery life of the terminal device.

In the above embodiments of the disclosure, the methods according to the embodiments of the disclosure are described from the perspectives of the network device and the terminal device, respectively. In order to realize each of the functions in the methods according to the above embodiments of the disclosure, the network device and the terminal device may include a hardware structure, a software module, and realize each of the above functions in the form of hardware structure, software module, or a combination of hardware structure and software module. A certain function of the above functions may be performed in the form of hardware structure, software module, or a combination of hardware structure and software module.

As illustrated in FIG. 6, FIG. 6 is a block diagram of a communication apparatus 60 according to an embodiment of the disclosure. The communication apparatus 60 shown in FIG. 6 may include a processing module 601 and a transceiver module 602.

The transceiver module 602 may include a transmitting module and/or a receiving module. The transmitting module is configured to realize a transmitting function, and the receiving module is configured to realize a receiving function. The transceiver module 602 can realize the transmitting function and/or receiving function.

It is understood that the communication apparatus 60 may be a terminal device, an apparatus in the terminal device, or an apparatus capable of being used in combination with the terminal device.

The communication apparatus 60 is applied to the terminal device side. The apparatus includes:

the processing module 601, configured to determine a first RRM measurement parameter corresponding to a number of receiving antennas in a terminal device based on a mapping relationship between a number of antennas and an RRM measurement parameter.

The processing module 601 is further configured to perform an RRM measurement based on the first RRM measurement parameter.

Alternatively, the processing module 601 is further configured to: determine the mapping relationship between the number of antennas and the RRM measurement parameter based on a protocol; or determine the mapping relationship between the number of antennas and the RRM measurement parameter based on a received indication message.

Alternatively, the processing module 601 is further configured to: determine that an RRM low mobility criterion measurement parameter is a first threshold in response to the number of receiving antennas in the terminal device being a first number; or determine that the RRM low mobility criterion measurement parameter is a second threshold in response to the number of receiving antennas in the terminal device being a second number.

The first number is different from the second number, and the first threshold is different from or same as the second threshold.

Alternatively, the first threshold and the second threshold are measurement duration thresholds; or the first threshold and the second threshold are signal strength difference thresholds; or the first threshold and the second threshold are a measurement duration threshold and a signal strength difference threshold.

Alternatively, the processing module 601 is further configured to: determine that an RRM stationary criterion measurement parameter is a third threshold in response to the number of receiving antennas in the terminal device being a first number; or determine that the RRM stationary criterion measurement parameter is a fourth threshold in response to the number of receiving antennas in the terminal device being a second number.

The first number is different from the second number, and the third threshold is different from or same as the fourth threshold.

Alternatively, the third threshold and the fourth threshold are measurement duration thresholds; or the third threshold and the fourth threshold are signal strength difference thresholds; or the third threshold and the fourth threshold are a measurement duration threshold and a signal strength difference threshold.

Alternatively, the processing module 601 is further configured to: determine that an RRM non-cell edge criterion measurement parameter is a fifth threshold in response to the number of receiving antennas in the terminal device being a first number; or determine that the RRM non-cell edge criterion measurement parameter is a sixth threshold in response to the number of receiving antennas in the terminal device being a second number.

The first number is different from the second number, and the fifth threshold is different from or same as the sixth threshold.

Alternatively, the fifth threshold and the sixth threshold are signal strength thresholds; or the fifth threshold and the sixth threshold are signal quality thresholds; or the fifth threshold and the sixth threshold are a signal strength threshold and a signal quality threshold.

Alternatively, the processing module 601 is further configured to: in a case that the terminal device is in a radio resource control (RRC) idle state, perform the RRM measurement based on the first RRM measurement parameter; or in a case that the terminal device is in an RRC inactive state, perform the RRM measurement based on the first RRM measurement parameter.

With the communication apparatus provided in the disclosure, the terminal device determines the first RRM measurement parameter corresponding to the number of receiving antennas in the terminal device based on the mapping relationship between the number of antennas and the RRM measurement parameter, and performs the RRM measurement based on the first RRM measurement parameter. In this way, the terminal device performs the RRM measurement based on the first RRM measurement parameter corresponding to the number of its antennas, thereby not only ensuring an accuracy and reliability of its antenna resource management, but also saving the power consumption of the terminal device and improving the battery life of the terminal device.

It is understood that the communication apparatus 60 may be a network device, an apparatus in the network device, or an apparatus capable of being used in combination with the network device.

The communication apparatus 60 is applied to a network device side. The apparatus includes:

the transceiver module 602, configured to send indication information, in which the indication information is configured to indicate a mapping relationship between a number of antennas and an RRM measurement parameter.

Alternatively, the indication information includes at least one of: a mapping relationship between the number of antennas and an RRM low mobility criterion measurement parameter; a mapping relationship between the number of antennas and an RRM stationary criterion measurement parameter; or a mapping relationship between the number of antennas and an RRM non-cell edge criterion measurement parameter.

Alternatively, the mapping relationship between the number of antennas and the RRM low mobility criterion measurement parameter includes a first threshold corresponding to a first number of antennas, and a second threshold corresponding to a second number of antennas.

The first number is different from the second number, and the first threshold is different from or same as the second threshold.

Alternatively, the first threshold and the second threshold are measurement duration thresholds; or the first threshold and the second threshold are signal strength difference thresholds; or the first threshold and the second threshold are a measurement duration threshold and a signal strength difference threshold.

Alternatively, the mapping relationship between the number of antennas and the RRM stationary criterion measurement parameter includes a third threshold corresponding to a first number of antennas, and a fourth threshold corresponding to a second number of antennas.

The first number is different from the second number, and the third threshold is different from or same as the fourth threshold.

Alternatively, the third threshold and the fourth threshold are measurement duration thresholds; or the third threshold and the fourth threshold are signal strength difference thresholds; or the third threshold and the fourth threshold are a measurement duration threshold and a signal strength difference threshold.

Alternatively, the mapping relationship between the number of antennas and the RRM non-cell edge criterion measurement parameter includes a fifth threshold corresponding to a first number of antennas, and a sixth threshold corresponding to a second number of antennas.

The first number is different from the second number, and the fifth threshold is different from or same as the sixth threshold.

Alternatively, the fifth threshold and the sixth threshold are signal strength thresholds; or the fifth threshold and the sixth threshold are signal quality thresholds; or the fifth threshold and the sixth threshold are a signal strength threshold and a signal quality threshold.

With the communication apparatus provided by the disclosure, the network device sends the indication information. The indication information is configured to indicate the mapping relationship between the number of antennas and the RRM measurement parameter. In this way, the network device sends the mapping relationship between the number of antennas and the RRM measurement parameter to the terminal device, so that the terminal device performs the RRM measurement based on the first RRM measurement parameter corresponding to the number of its antennas, thereby not only ensuring an accuracy and reliability of its antenna resource management, but also saving the power consumption of the terminal device and improving the battery life of the terminal device.

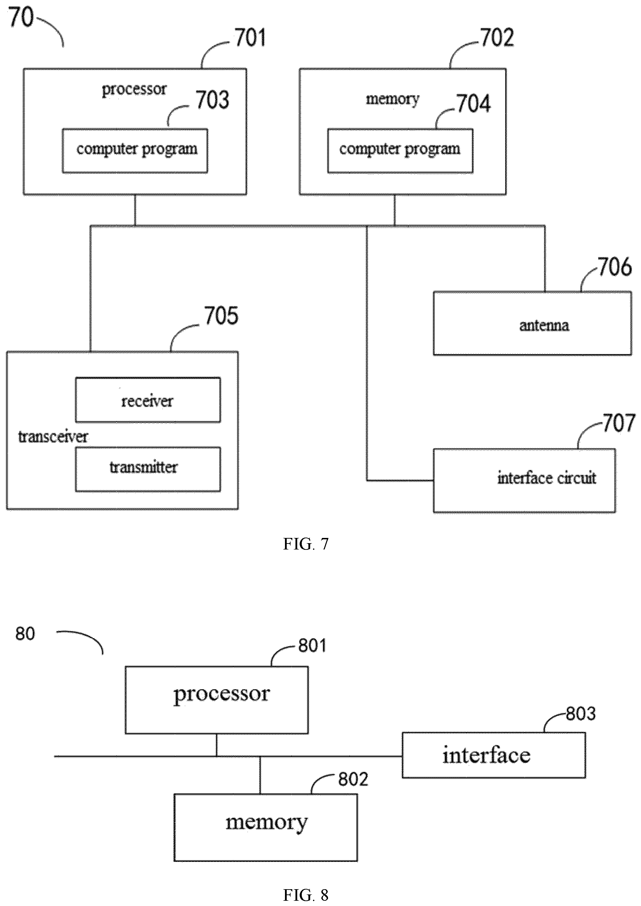

As illustrated in FIG. 7, FIG. 7 is a block diagram of another communication apparatus 70 provided by an embodiment of the disclosure. The communication apparatus 70 may be a network device or a terminal device, or may be a chip, a chip system or a processor that supports the network device to realize the above-described methods, or may be a chip, a chip system or a processor that supports the terminal device to realize the above-described methods. The apparatus may be used to realize the methods described in the above method embodiments with reference to the description of the above-described method embodiments.

The communication apparatus 70 may include one or more processors 701. The processor 701 may be a general purpose processor or a dedicated processor, such as, a baseband processor and a central processor. The baseband processor is used for processing communication protocols and communication data. The central processor is used for controlling the communication apparatus (e.g., a base station, a baseband chip, a terminal device, a terminal device chip, a DU, or a CU), executing computer programs, and processing data of the computer programs.

Alternatively, the communication apparatus 70 may include one or more memories 702 on which computer programs 704 may be stored. The processor 701 executes the computer programs 704 to cause the communication apparatus 70 to perform the methods described in the above method embodiments. Alternatively, the memory 702 may also store data. The communication apparatus 70 and the memory 702 may be provided separately or may be integrated together.

Alternatively, the communication apparatus 70 may also include a transceiver 705 and an antenna 706. The transceiver 705 may be referred to as a transceiver unit, a transceiver machine, or a transceiver circuit, for realizing a transceiver function. The transceiver 705 may include a receiver and a transmitter. The receiver may be referred to as a receiving machine or a receiving circuit, for realizing the receiving function. The transmitter may be referred to as a transmitter machine or a transmitting circuit, for realizing the transmitting function.

Alternatively, the communication apparatus 70 may also include one or more interface circuits 707. The interface circuits 707 are used to receive code instructions and transmit them to the processor 701. The processor 701 runs the code instructions to cause the communication apparatus 70 to perform the method described in the method embodiments.

The communication apparatus 70 is a remote terminal device. The processor 701 is used to perform steps 21-22 in FIG. 2, or step 31, step 32 and step 33 in FIG. 3; or step 41, step 42 and step 43 in FIG. 4.

The communication apparatus 70 is a network device. The processor 701 is used to perform step 51 in FIG. 5.

In an implementation, the processor 701 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor 701 may store a computer program 703. When the computer program 703 runs on the processor 701, the communication apparatus 70 is caused to perform the methods described in the method embodiments above. The computer program 703 may be solidified in the processor 701, and in such case the processor 701 may be implemented by hardware.

In an implementation, the communication apparatus 70 may include circuits. The circuits may implement the sending, receiving or communicating function in the preceding method embodiments. The processor and the transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the description of the above embodiments may be a network device or a terminal device, but the scope of the communication apparatus described in the disclosure is not limited thereto, and the structure of the communication apparatus may not be limited by FIG. 7. The communication apparatus may be a stand-alone device or may be part of a larger device. For example, the described communication apparatus may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal device, a smart terminal device, a cellular phone, a wireless device, a handheld machine, a mobile unit, an in-vehicle device, a network device, a cloud device, an artificial intelligence device, and the like; and
(6) others.

The case where the communication apparatus may be a chip or a chip system is described with reference to the schematic structure of the chip shown in FIG. 8. The chip shown in FIG. 8 includes a processor 801 and an interface 802. There may be one or more processors 801, and there may be multiple interfaces 802.

In cases where the chip is used to implement the function of the remote terminal device in the embodiment of the disclosure:
the interface 802 is used to perform step 32 of FIG. 3.

In cases where the chip is used to implement the function of the network device in the embodiment of the disclosure:
the interface 802 is used to perform step 51 of FIG. 5.

Alternatively, the chip further includes a memory 803 used to store necessary computer programs and data.

It is understood by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be understood as beyond the scope of protection of the embodiments of the disclosure.

The embodiments of the disclosure also provide a communication system. The communication system includes a communication apparatus acting as a terminal device and a communication apparatus acting as a network device in the preceding embodiment of FIG. 11, or the system includes a communication apparatus acting as a terminal device and a communication apparatus acting as a network device in the preceding embodiment of FIG. 8.

The disclosure also provides a computer-readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art can understand that the first, second, and other various numerical numbers involved in the disclosure are only described for the convenience of differentiation, and are not used to limit the scope of the embodiments of the disclosure, or used to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that can be understood by the communication apparatus, and the values or representations of the parameters may be other values or representations that can be understood by the communication apparatus. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can be referred to the corresponding processes in the preceding method embodiments, and will not be repeated herein.

The above are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A radio resource management (RRM) measurement method, comprising:
determining a first RRM measurement parameter corresponding to a number of receiving antennas in a terminal device based on a mapping relationship between a number of antennas and an RRM measurement parameter; and
performing an RRM measurement based on the first RRM measurement parameter.

2. The method of claim 1, further comprising:
determining the mapping relationship between the number of antennas and the RRM measurement parameter based on a protocol; or
determining the mapping relationship between the number of antennas and the RRM measurement parameter based on a received indication message.

3. The method of claim 1, wherein determining the first RRM measurement parameter corresponding to the number of receiving antennas in the terminal device comprises:
determining that an RRM low mobility criterion measurement parameter is a first threshold in response to the number of receiving antennas in the terminal device being a first number; or
determining that the RRM low mobility criterion measurement parameter is a second threshold in response to the number of receiving antennas in the terminal device being a second number;
wherein, the first number is different from the second number, and the first threshold is different from or same as the second threshold.

4. The method of claim 3, wherein,
the first threshold and the second threshold are measurement duration thresholds; or
the first threshold and the second threshold are signal strength difference thresholds; or
the first threshold and the second threshold are a measurement duration threshold and a signal strength difference threshold.

5. The method of claim 1, wherein determining the first RRM measurement parameter corresponding to the number of receiving antennas in the terminal device comprises:
determining that an RRM stationary criterion measurement parameter is a third threshold in response to the number of receiving antennas in the terminal device being a first number; or
determining that the RRM stationary criterion measurement parameter is a fourth threshold in response to the number of receiving antennas in the terminal device being a second number;
wherein, the first number is different from the second number, and the third threshold is different from or same as the fourth threshold.

6. The method of claim 5, wherein,
the third threshold and the fourth threshold are measurement duration thresholds; or
the third threshold and the fourth threshold are signal strength difference thresholds; or
the third threshold and the fourth threshold are a measurement duration threshold and a signal strength difference threshold.

7. The method of claim 1, wherein determining the first RRM measurement parameter corresponding to the number of receiving antennas in the terminal device comprises:
determining that an RRM non-cell edge criterion measurement parameter is a fifth threshold in response to the number of receiving antennas in the terminal device being a first number; or
determining that the RRM non-cell edge criterion measurement parameter is a sixth threshold in response to the number of receiving antennas in the terminal device being a second number;
wherein, the first number is different from the second number, and the fifth threshold is different from or same as the sixth threshold.

8. The method of claim 7, wherein,
the fifth threshold and the sixth threshold are signal strength thresholds; or
the fifth threshold and the sixth threshold are signal quality thresholds; or
the fifth threshold and the sixth threshold are a signal strength threshold and a signal quality threshold.

9. The method of any of claims 1-8, wherein performing the RRM measurement based on the first RRM measurement parameter comprises:
in a case that the terminal device is in a radio resource control (RRC) idle state, performing the RRM measurement based on the first RRM measurement parameter; or
in a case that the terminal device is in an RRC inactive state, performing the RRM measurement based on the first RRM measurement parameter.

10. A radio resource management (RRM) measurement method, comprising:
sending indication information, wherein the indication information is configured to indicate a mapping relationship between a number of antennas and an RRM measurement parameter.

11. The method of claim 10, wherein the indication information comprises at least one of:
a mapping relationship between the number of antennas and an RRM low mobility criterion measurement parameter;
a mapping relationship between the number of antennas and an RRM stationary criterion measurement parameter; or
a mapping relationship between the number of antennas and an RRM non-cell edge criterion measurement parameter.

12. The method of claim 11, wherein the mapping relationship between the number of antennas and the RRM low mobility criterion measurement parameter comprises:
a first threshold corresponding to a first number of antennas, and a second threshold corresponding to a second number of antennas;
wherein, the first number is different from the second number, and the first threshold is different from or same as the second threshold.

13. The method of claim 12, wherein,
the first threshold and the second threshold are measurement duration thresholds; or
the first threshold and the second threshold are signal strength difference thresholds; or
the first threshold and the second threshold are a measurement duration threshold and a signal strength difference threshold.

14. The method of claim 11, wherein the mapping relationship between the number of antennas and the RRM stationary criterion measurement parameter comprises:
a third threshold corresponding to a first number of antennas, and a fourth threshold corresponding to a second number of antennas;
wherein, the first number is different from the second number, and the third threshold is different from or same as the fourth threshold.

15. The method of claim 14, wherein,
the third threshold and the fourth threshold are measurement duration thresholds; or
the third threshold and the fourth threshold are signal strength difference thresholds; or
the third threshold and the fourth threshold are a measurement duration threshold and a signal strength difference threshold.

16. The method of any of claims 11-15, wherein the mapping relationship between the number of antennas and the RRM non-cell edge criterion measurement parameter comprises:
a fifth threshold corresponding to a first number of antennas, and a sixth threshold corresponding to a second number of antennas;
wherein, the first number is different from the second number, and the fifth threshold is different from or same as the sixth threshold.

17. The method of claim 16, wherein,
the fifth threshold and the sixth threshold are signal strength thresholds; or
the fifth threshold and the sixth threshold are signal quality thresholds; or
the fifth threshold and the sixth threshold are a signal strength threshold and a signal quality threshold.

18. A communication apparatus, disposed on a terminal device side, comprising:
a processing module, configured to determine a first RRM measurement parameter corresponding to a number of receiving antennas in a terminal device based on a mapping relationship between a number of antennas and an RRM measurement parameter; and
wherein, the processing module is further configured to perform an RRM measurement based on the first RRM measurement parameter.

19. The apparatus of claim 18, wherein the processing module is further configured to:
determine the mapping relationship between the number of antennas and the RRM measurement parameter based on a protocol; or
determine the mapping relationship between the number of antennas and the RRM measurement parameter based on a received indication message.

20. The apparatus of claim 18, wherein the processing module is further configured to:
determine that an RRM low mobility criterion measurement parameter is a first threshold in response to the number of receiving antennas in the terminal device being a first number; or
determine that the RRM low mobility criterion measurement parameter is a second threshold in response to the number of receiving antennas in the terminal device being a second number;
wherein, the first number is different from the second number, and the first threshold is different from or same as the second threshold.

21. The apparatus of claim 20, wherein,
the first threshold and the second threshold are measurement duration thresholds; or
the first threshold and the second threshold are signal strength difference thresholds; or
the first threshold and the second threshold are a measurement duration threshold and a signal strength difference threshold.

22. The apparatus of claim 18, wherein the processing module is further configured to:
determine that an RRM stationary criterion measurement parameter is a third threshold in response to the number of receiving antennas in the terminal device being a first number; or,
determine that the RRM stationary criterion measurement parameter is a fourth threshold in response to the number of receiving antennas in the terminal device being a second number;
wherein, the first number is different from the second number, and the third threshold is different from or same as the fourth threshold.

23. The apparatus of claim 22, wherein,
the third threshold and the fourth threshold are measurement duration thresholds; or
the third threshold and the fourth threshold are signal strength difference thresholds; or
the third threshold and the fourth threshold are a measurement duration threshold and a signal strength difference threshold.

24. The apparatus of claim 18, wherein the processing module is further configured to:
determine that an RRM non-cell edge criterion measurement parameter is a fifth threshold in response to the number of receiving antennas in the terminal device being a first number; or,
determine that the RRM non-cell edge criterion measurement parameter is a sixth threshold in response to the number of receiving antennas in the terminal device being a second number;
wherein, the first number is different from the second number, and the fifth threshold is different from or same as the sixth threshold.

25. The apparatus of claim 24 wherein,
the fifth threshold and the sixth threshold are signal strength thresholds; or
the fifth threshold and the sixth threshold are signal quality thresholds; or
the fifth threshold and the sixth threshold are a signal strength threshold and a signal quality threshold.

26. The apparatus of any of claims 18-25, wherein the processing module is further configured to:
in a case that the terminal device is in a radio resource control (RRC) idle state, perform the RRM measurement based on the first RRM measurement parameter; or
in a case that the terminal device is in an RRC inactive state, perform the RRM measurement based on the first RRM measurement parameter.

27. A radio resource management (RRM) measurement apparatus, disposed on a network device side, comprising:
a transceiver module, configured to send indication information, wherein the indication information is configured to indicate a mapping relationship between a number of antennas and an RRM measurement parameter.

28. The apparatus of claim 27, wherein the indication information comprises at least one of:
a mapping relationship between the number of antennas and an RRM low mobility criterion measurement parameter;
a mapping relationship between the number of antennas and an RRM stationary criterion measurement parameter; or
a mapping relationship between the number of antennas and an RRM non-cell edge criterion measurement parameter.

29. The apparatus of claim 28, wherein the mapping relationship between the number of antennas and the RRM low mobility criterion measurement parameter comprises:
a first threshold corresponding to a first number of antennas, and a second threshold corresponding to a second number of antennas;
wherein, the first number is different from the second number, and the first threshold is different from or same as the second threshold.

30. The apparatus of claim 29, wherein,
the first threshold and the second threshold are measurement duration thresholds; or
the first threshold and the second threshold are signal strength difference thresholds; or
the first threshold and the second threshold are a measurement duration threshold and a signal strength difference threshold.

31. The apparatus according to claim 28, wherein the mapping relationship between the number of antennas and the RRM stationary criterion measurement parameter comprises:
a third threshold corresponding to a first number of antennas, and a fourth threshold corresponding to a second number of antennas;
wherein, the first number is different from the second number, and the third threshold is different from or same as the fourth threshold.

32. The apparatus of claim 31 wherein,
the third threshold and the fourth threshold are measurement duration thresholds; or
the third threshold and the fourth threshold are signal strength difference thresholds; or
the third threshold and the fourth threshold are a measurement duration threshold and a signal strength difference threshold.

33. The apparatus of any of claims 28-32, wherein the mapping relationship between the number of antennas and the RRM non-cell edge criterion measurement parameter comprises:
a fifth threshold corresponding to a first number of antennas, and a sixth threshold corresponding to a second number of antennas;
wherein, the first number is different from the second number, and the fifth threshold is different from or same as the sixth threshold.

34. The apparatus of claim 33, wherein,
the fifth threshold and the sixth threshold are signal strength thresholds; or
the fifth threshold and the sixth threshold are signal quality thresholds; or
the fifth threshold and the sixth threshold are a signal strength threshold and a signal quality threshold.

35. A communication apparatus, comprising: a processor and a memory, wherein, a computer program is stored in the memory, and the processor executes the computer program stored in the memory, to cause the apparatus to perform the method of any of claims 1 to 9.

36. A communication apparatus, comprising: a processor and a memory, wherein, a computer program is stored in the memory, and the processor executes the computer program stored in the memory, to cause the apparatus to perform the method of any of claims 10 to 17.

37. A communication apparatus, comprising: a processor and an interface circuit,
wherein, the interface circuit is configured to receive code instructions and transmit the code instructions to the processor; and
the processor is configured to execute the code instructions to perform the method of any of claims 1-9.

38. A communication apparatus, comprising: a processor and an interface circuit,
wherein, the interface circuit is configured to receive code instructions and transmit the code instructions to the processor; and
the processor is configured to execute the code instructions to perform the method of any of claims 10-17.

39. A computer-readable storage medium for storing instructions, wherein, when the instructions are executed, the method of any of claims 1 to 9 is implemented.

40. A computer-readable storage medium for storing instructions, wherein, when the instructions are executed, the method of any of claims 10 to 17 is implemented.
